# EUROPEAN PATENT APPLICATION

(11) **EP 2 224 448 A1**
(43) Date of publication of application: **01.09.2010**
(21) Application number: 09250536.1
(22) Date of filing: 27.02.2009
(51) Int. Cl.: G11B 27/10, G11B 27/32, G11B 27/34, G06F 17/30, H04N 5/445

(54) **Media exploration**

(71) Applicant: BRITISH TELECOMMUNICATIONS public limited company, London EC1A 7AJ (GB)
(72) Inventor: The designation of the inventor has not yet been filed
(74) Representative: Williamson, Simeon Paul

(57) **Abstract**

A method of processing a non-linear narrative article to improve a user's interactive experience is described. A user watching the narrative article can select options during presentation which influence subsequently viewed media clips associated with the selected options. The user navigates a single downstream path through the many possible paths in the narrative. In addition to downstream non-linear navigation, at each navigational decision point, upstream parts of the non-linear narrative are identified and the user is presented with upstream navigation options to enable non-linear upstream navigation through the narrative.

## Description

The present invention is concerned with non-linear narrative media articles and in particular with upstream navigation within such non-linear narrative media articles.

### Background

Multimedia articles are sequences of audio and/or video content, for example a movie clip or a presentation. Such articles are typically linear in that there is a predefined order of displaying the sequences between the beginning of the multimedia article and the end. For example, from a set of audio sequences A, B and C and video sequences I, II, III and IV, a media article may be defined as III + A followed by I followed by IV + C and finally II + B. Once the designer of the media article has defined the sequence, it is fixed and even though a viewer can navigate to points within the article, the order of presentation of the sequences is fixed.

In order to provide the viewer with a more enjoyable viewing experience, it is desirable for the viewer to have some control over the order in which the component media sequences are displayed. To address this issue, it is also known in the art to provide a "non-linear interactive" or "shape-shifted" storyline.

In such a storyline, the user is presented with choices during the storyline and the subsequent parts of the story vary in dependence upon the choices made by the user. During a storyline, the user will have many opportunities to make choices, thereby allowing many possible outcomes. In this way the user is made to feel that the program is tailored to their specific interests.

In addition to the ability to choose future paths through a non-linear narrative media article, the non-linear aspect of the article means that the viewer is also able to jump backwards in the narrative or "rewind". In this way, a user can choose to go back to a certain point in the presentation they have already explored.

In one example of the rewind feature, the user has a "rewind" button which allows the user to jump back to the last encountered decision point within the non-linear narrative media article. In order to implement this feature, the system maintains a log of the user's decisions as they navigate the narrative article. When a request to rewind is received, the viewing software restarts the narrative article and replays the sequence of user choices but skips the actual playback of the associated media clips until the rewind point is reached, then playback of the narrative continues.

In an alternative rewind method, the viewing system allows the user to rewind backwards in blocks of time by maintaining a recording of the user's path through the narrative. In this way, a user can select to rewind the narrative to replay, for example, the most recently displayed five minutes of the narrative.

In both cases, the rewind mechanism is limited in that it only permits a user to replay what has previously been experienced. In this sense, the known non-linear narratives are in fact only non-linear in the forward direction. In the backwards or rewind direction, the narratives are linear.

The present invention addresses the above problem.

In one aspect, the present invention provides a method displaying a non-linear narrative article as set out in claim 1.

In another aspect, the present invention provides an apparatus for enabling upstream navigation of non-linear narrative articles as set out in claim 6.

Embodiments of the invention will now be described with reference to the accompanying figures in which:
Figure 1 shows an overview of an upstream navigation system according to a first embodiment for an upstream navigation system and in particular shows the interface presented to the user of the non-linear narrative by a viewer computer;
Figure 2 schematically shows the physical components of the viewer computer illustrated in Figure 1;
Figure 3 schematically shows the functional components of the upstream navigation system as implemented on the viewer computer illustrated in Figure 2, including a non-linear narrative renderer;
Figure 4 shows an example non-linear narrative data structure which can be processed by a non-linear narrative renderer illustrated in Figure 3;
Figure 5 shows the internal data structure of the nodes of the non-linear narrative data structure illustrated in Figure 4;
Figure 6 shows the example non-linear narrative data structure and the progress of a user's navigation through the narrative;
Figure 7 shows the contents of the narrative log illustrated in Figure 3; and
Figure 8 shows a flowchart of the processing steps performed by the non-linear narrative renderer illustrated in Figure 3.

### Description

An embodiment of the present invention will now be described.

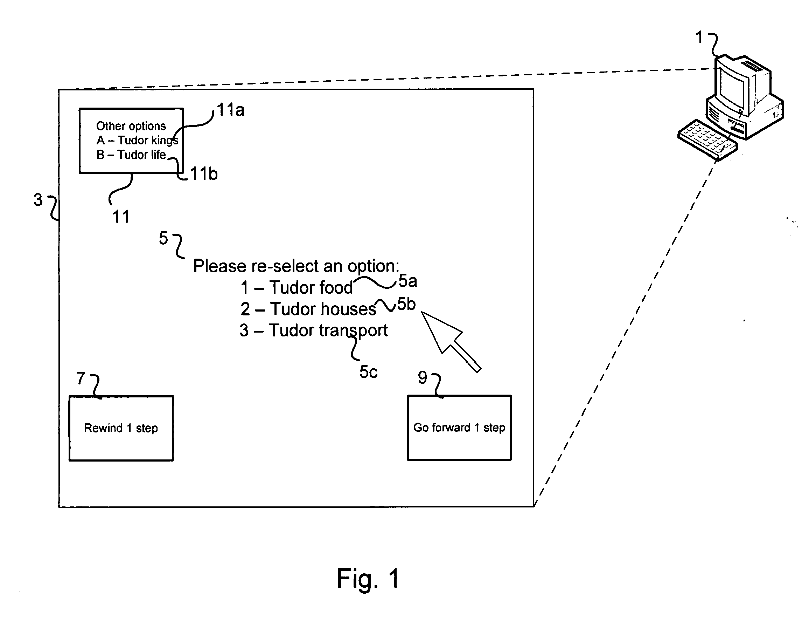

Figure 1 shows an overview of an upstream navigation system according to a first embodiment for an upstream navigation system and in particular shows the interface presented to the user of the non-linear narrative by a viewer computer.

In Figure 1, the navigation system is embodied in the computer 1. The enlarged view of a display 3 of the computer 1 shows the interface that is seen by an end user. At certain points along the narrative, the user is presented with navigation options. In the centre of the screen, a number of downstream options 5 are presented. In this example there are three downstream options 5a, 5b, 5c which represent new media clips that the user can choose.

The lower left section of the screen contains a "rewind" button 7. If the user clicks this rewind button 7, the previous decision option screen choices are presented to the user as is conventional.

The lower right section of the screen contains a "forward" button 9. Where a user has previously clicked the rewind button 7, clicking the forward button 9 allows the user to jump forward to the last decision point without having to watch the media clip associated with the decision again.

In the top left of the screenshot, the upstream navigation buttons 11 are displayed to the user. In Figure 1 there are 2 options 11 a and 11 b. These are options which are upstream of the current decision point but lead to the decision point currently displayed to the user as defined by the structure of the non-linear narrative being navigated.

### Client computer

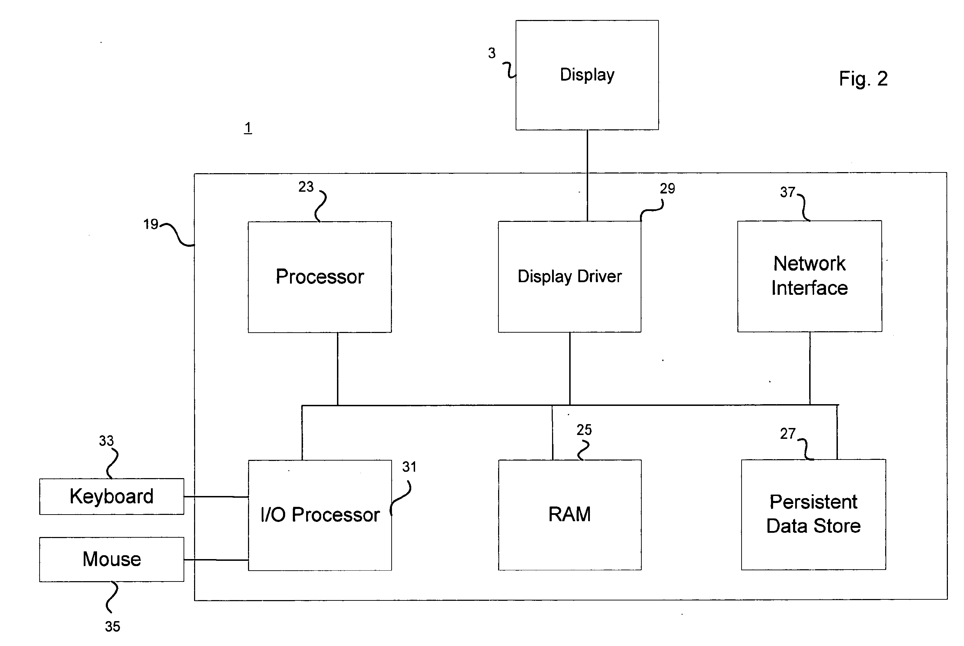

The physical components of the computer are shown in Figure 2.

The computer 1 is formed of a processing unit 19 connected to a display 3. The processing unit 19 contains a processor 23 for executing program instructions stored in RAM 25 and/or persistent data store 27.

The processing unit 19 also contains a display driver 29 for driving a user interface on the display 3, an input/output unit 31 for receiving user input from a keyboard 33 and mouse 35 and a network interface 37 for connecting the computer 3 to a network (not shown). All of the internal components of the processing unit 19 are connected via an internal data bus 39.

### Functional Components

In operation, the processor 23 executes program instructions stored in persistent data store 27 and/or RAM 25 to configure the client computer 1 to present the non-linear narrative to the user. The program code executed by the processor causes the computer as a whole to be configured to process and present non-linear narratives. As a result of the program instructions, the computer 1 can be described as a set of functional blocks which process data to allow a user to view a non-linear narrative in a conventional downstream manner and also to allow a user to navigate in the upstream direction when required.

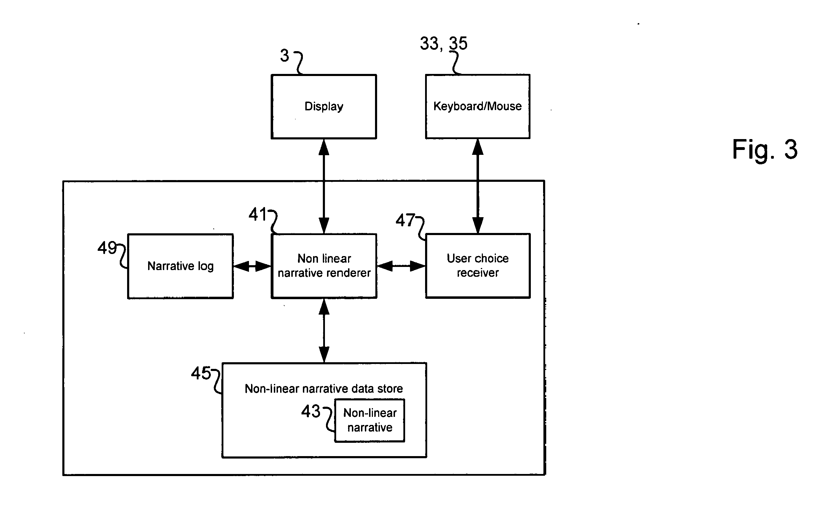

As shown in Figure 3, a non-linear narrative renderer 41 processes a non-linear narrative 43 data structure stored in a non-linear narrative data store 45 which is located partially in physical RAM 25 and partially in the persistent data store 27.

The options available to the user are displayed on display 3 during the presentation, the user can enter selections via the keyboard 33 or mouse 35 and these selections are received by user choice receiver 47 and forwarded to the non-linear narrative renderer 41 for processing. The user's choice is processed and media clip associated with the selected option is presented to the user via display 3.

As the user navigates the non-linear narrative 43, the user's choices are stored in narrative log 49 by the non-linear narrative renderer 41.

As is conventional, the non-linear narrative renderer 41 allows a user to rewind through the narrative by rewinding to previously presented sections of the narrative.

The non-linear narrative renderer 41 in this embodiment differs from a conventional narrative renderer in that it also provides the functionality to allow a user to navigate in an upstream direction. The user can select to rewind the narrative to a previously seen media, and additionally the user can view other previously unexplored segments of the narrative which are upstream of the current media clip but lead onto the current media clip.

An illustrative example of the operation of the upstream navigation will now be given.

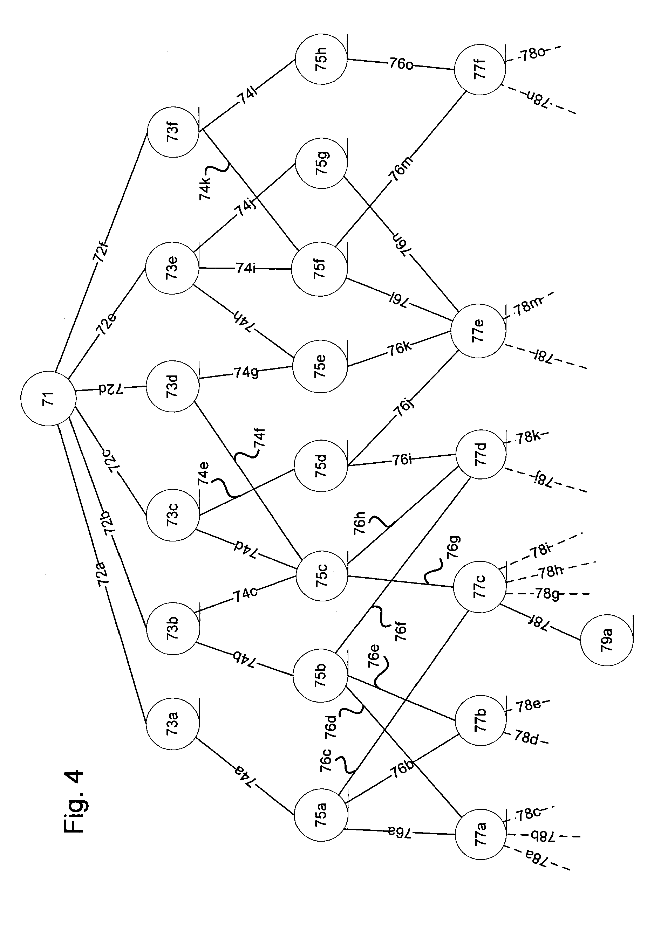

Figure 4 shows the contents of a sample non-linear narrative 43 that has been generated by a narrative generation system which does not form part of the present invention.

In the example non-linear narrative 43, the structure can be represented as a tree having a root node 71 from which the narrative begins and a larger number of intermediary and leaf nodes 73, 75, 77, 79 connected by branches 72, 74, 76, 78. A sequence of nodes 71, 73, 75, 77, 79 linked by branches 72, 74, 76, 78 represents a path through the non-linear narrative 43. As is known, the non-linear aspect of the non-linear narrative arises from the fact that the user can select different media clips at predetermined points in the narrative 43. The designer/author of the non-linear narrative 43 assembles the clips and determines where the decision points are located between media clips. As such, in Figure 4, the branches 72, 74, 76, 78 represent media clips, and the circular nodes 71, 73, 75, 77, 79 represent decision points.

The hierarchy of nodes in Figure 4 represents hierarchies of decisions and is not necessarily representative of time. Each of the media clips represented by branches may have a different duration to other clips in the same level of the tree. However, the tree only models the fact that a clip is played in its entirety.

An example of a non-linear narrative in which the clips are the same length would be a football match recorded with multiple cameras to track different players or stadium angles. In this case the non-linear narrative would be generated from the multiple 90 minute sections split into equal length segments of, for example, ten minutes with decision nodes each end of the media segments giving the user the option of switching the focus of the presentation to a different angle or player. Each level in the node hierarchy represents a related ten minute segment of the total presentation. In this type of non-linear narrative, each node in a particular level of the hierarchy has upstream and downstream links to every node in the respective higher and lower levels of the hierarchy giving extensive viewing options maximum flexibility.

An example of a non-linear narrative in which the clips could be different lengths would be a documentary programme. In this case the levels of hierarchy in the nodes are split according to the level of detail in the information content and upstream and downstream links are set according to subject matter relevance.

In Figure 4, root node 71 has six branches 72a, 72b, 72c, 72d, 72e, 72f, each branch leading to first level hierarchy nodes 73a, 73b, 73c, 73d, 73e and 73f respectively. The first level nodes 73 collectively have twelve branches 74a-I leading to second level nodes 75a-h. The number of branches 74 is higher than the number of nodes 75 because some of the first level nodes 73 are decision points allowing the user to choose a path through the narrative tree 43. For example, node 73b contains branches 74b and 74c to nodes 75b and 75c. The second level nodes 75 collectively have fifteen branches 76a-o leading to third level nodes 77a-f. The third level nodes 77 collectively have fifteen nodes 78a-o leading to fourth level nodes 79. Only nodes 79a-d are shown in Figure 4.

As mentioned earlier, the non-linear aspect of the non-linear narrative 43 arises because the nodes in the non linear narrative 43 can have more than one downstream branch.

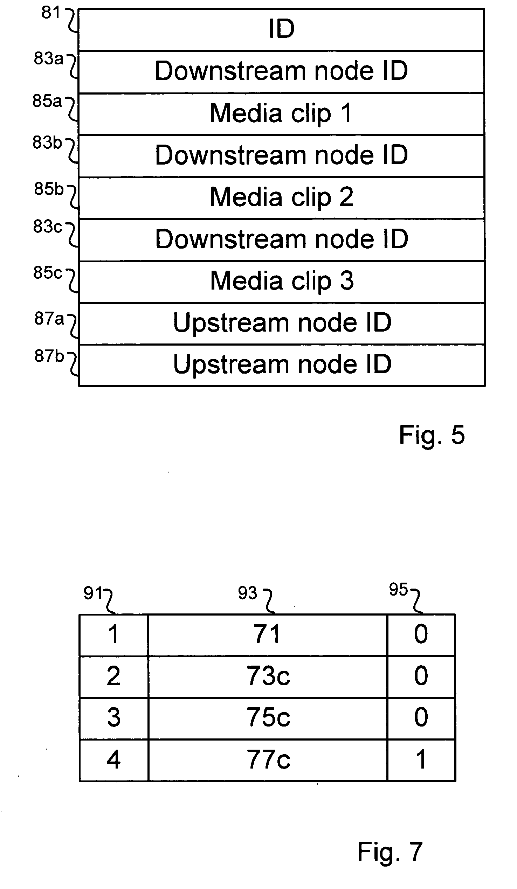

Figure 5 shows the data structure of each individual node. Each node data structure contains three main parts, a unique identity field 81, downstream information 83, 85 and upstream node information 87. The unique identity field 81 allows each node to be uniquely addressed and identified. In this embodiment it is a title to be displayed to the user during navigation. The downstream information 83, 85 contains two parts, a field for the identity of a downstream node 83 and the media clip 85 associated with a decision. In Figure 5 there are three downstream information fields, 83a, 85a, 83b, 85b, 83c, and 85c. Arriving at this node, the user would be presented with three choices and the clip that is displayed is dependent on the user's selection.

The node data structure also contains the identity of any upstream nodes to enable upstream navigation as will be described later.

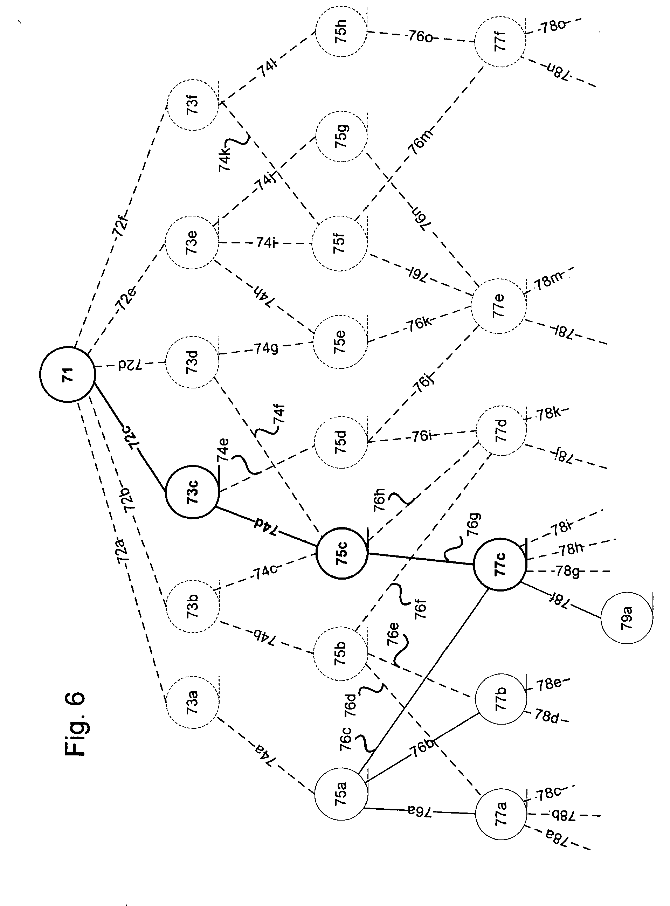

Figure 6 shows the status of the tree structure after a user has navigated along an example path through the tree. In the example, the user is at node 77c in the narrative and their path to that node can be summarised as below:
node 71 → select branch 72c
   branch 72c → node 73c;
node 73c → select branch 74d;
   branch 74d → node 75c;
node 75c → select branch 76g;
   branch 76g → node 77c;
node 77c → options branch 78f, 78g, 78h or 78i.

The path through the narrative tree is shown in bold.

The user is at node 77c and therefore the downstream options are branches 78f-I leading to nodes 79a-d. These nodes are presented to the user as downstream options 5 on the display 3. The user arrived at node 77c from branch 76g, it can however also be reached by branch 76c originating from node 75a. Therefore in the upstream direction, the options 75c and 75a are presented to the user as upstream options 11 on the display 3. This information is extracted from the data structure of node 77c which as described above contains information of its upstream and downstream nodes.

Nodes which are not accessible from a user's location within the narrative are shown as dashed lines in Figure 6. They are not accessible because the narrative does not define any branches from the current node to those nodes. Therefore conventionally, the user would not be able to explore the content associated with those nodes without re-starting the narrative and choosing different options.

Since upstream nodes are displayed, the user can select and navigate to different parts of the narrative that would not normally be experienced.

By allowing upstream navigation and in particular displaying options which lead to the current node, the user's navigation through the non-linear narrative becomes non-linear in both the downstream and upstream directions and also allows lateral movement through the narrative 43.

In order to implement the rewind 7 and forward 9 buttons, the non-linear narrative renderer 41 maintains a history of the user's navigation through the narrative 43 in the narrative log 49. The log for the above example is shown in Figure 7.

The narrative log 49 contains a sequential list of the unique identifiers 81 associated with each node that has been presented to the user, i.e. a number field 91, a corresponding node identity field 93 and a current location field 95. Normally the last entry (with the highest numeric value) in the log denotes the last node that was encountered before the rewind button 7 was selected and hence the current node options displayed to the user. When the user selects the rewind button 7, the non-linear narrative rendering engine 41 accesses the narrative log to find the next lowest numeric value identifier 91 and updates the current location field 95. The corresponding node identity 91 is used as a lookup in to the non-linear narrative 43 and the information associated with that node is presented to the user.

When the user selects the forward button 9, the non-linear narrative rendering engine 41 determines the current node by accessing the narrative log and the current location field 95. The node identity of the current node is used as a lookup to the non-linear narrative 43 and the node options are rendered for the user.

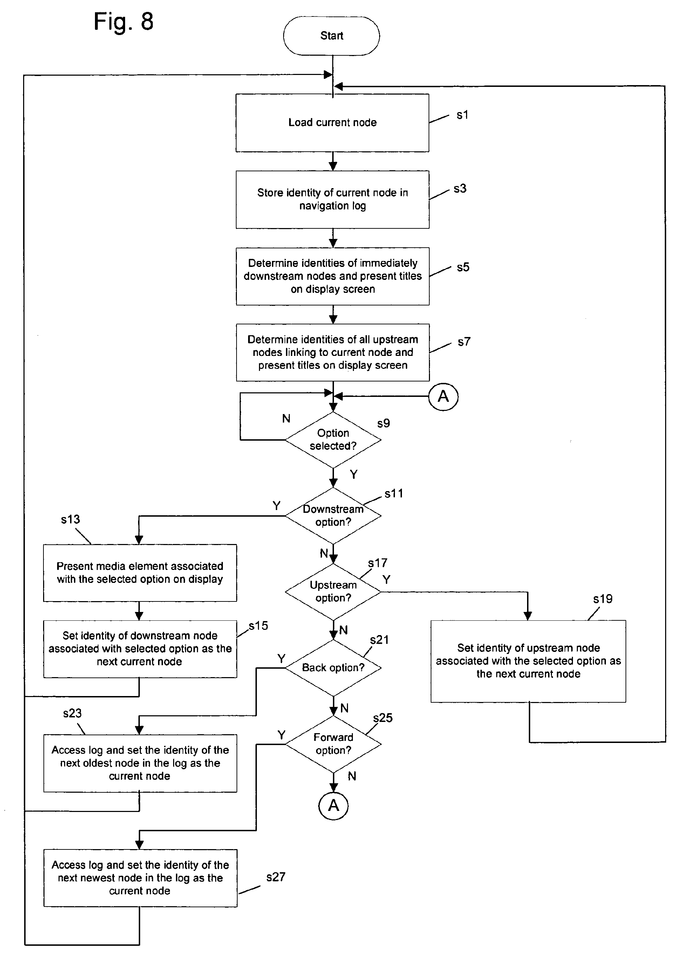

Figure 8 is a flowchart showing the processing of the non-linear narrative renderer 41. In step s1, the current node in the narrative is loaded from the non-linear narrative 43 and in step s3, the identity of the current node in node field 81 is stored in the log 49. The current node is processed in step s5 to determine the downstream node identities from downstream node identity fields 83 and the title of those nodes are presented as downstream options in a part of the screen 5. Next the current node is processed in step s7 to determine the upstream node identities from upstream node identity fields 87 and the title of those upstream nodes are presented as downstream options in a part of the screen 11.

The non-linear narrative renderer 41 waits at step s9 for an indication from user choice receiver 47 that the user has made a selection for further navigation. Until a selection has not been made, the non-linear narrative renderer 41 is arranged to loop on this step.

When a selection has been made, the non-linear narrative renderer 41 must determine what has been chosen by the user and take appropriate action. At step s11, a test is carried out to determine whether one of the options in the downstream navigation part of the screen 5 was selected. If so, processing proceeds to step s13 where the media element associated with the selected option is presented to the user. After presentation, at step s15 the non-linear narrative renderer 41 sets the selected downstream node as the new current node and processing returns to step s1.

If a downstream option was not selected, the processing moves to step s17 to check whether an upstream option is selected. If the non-linear narrative renderer 41 determines that an upstream option in the upstream navigation part of the screen 11 was selected then at step s19 the selected upstream node is set as the new current node and processing returns to step s1.

If an upstream option was not selected, processing moves to step s21 to check whether the rewind button 7 was pressed. If so, at step s23 the narrative log is accessed and the previous entry to the current node is set as the current node and processing returns to step s1.

If the rewind button 7 was not selected, processing moves to step s21 to check whether the forward button 9 was pressed. If so, at step s23 the narrative log is accessed and if present, the entry after the current node is set as the new current node and processing returns to step s1. Clearly this option is only possible if the user had previously pressed the back button.

Processing simply returns to step s9 if in step s25 the non-linear narrative renderer 41 cannot determine whether the forward option was selected.

### Alternatives and modifications

In the embodiment, the non-linear narrative itself contained the upstream node information and the non-linear narrative renderer 41 accessed the nodes of the narrative for the upstream node identities. In a modification, for narratives which do not contain upstream node information, the narrative system 1 contains a preprocessor for analysing the non-linear narrative and building a lookup table of the links between nodes. The narrative renderer accesses this lookup table instead of the nodes to determine and display the downstream and upstream navigation options. This enables the non-linear narrative system to be used with a wider range of narratives.

In the embodiment, the narrative had nodes containing the media clips with the narrative structure information. In an alternative, the narrative is processed to separate the media clips from the narrative tree structure.

In the embodiment, the non-linear narrative requires the user to choose an upstream or downstream option at the end of each media element. In a modification; each node contains information of a default node and associated media element to be played where no user decision is received. This allows viewing where the user wants to reduce the level of interaction during presentation.

In the embodiment, a single computer stores and processes the non-linear narrative. In an alternative, a client and server model is adopted. For example, the server stores the non-linear narrative and contains the non-linear renderer processing. In response to user selections forwarded from a user at the client machine, the server determines what to display to the user and streams the appropriate data to the client.

## Claims

1. A method of displaying a non-linear narrative media article having a plurality of media elements and decision nodes arranged in a tree data structure, each decision node in the tree having at least one downstream decision node and at least one upstream node, the method comprising:
processing a current decision node and presenting on a display screen options relating to downstream decision nodes and at least two upstream decision nodes leading to the current decision node;
receiving a user's selection of one of the presented upstream options; and
processing the selected upstream decision node to present further upstream and downstream decision nodes, so as to enable non-linear upstream navigation of the non-linear narrative article.

2. A method according to claim 1 wherein the decision nodes contain information identifying their upstream nodes, and the processing of a current decision node includes the step of accessing decision points to identify upstream nodes.

3. A method according to claim 1 or claim 2, further comprising a step of preprocessing the non-linear narrative article to build a lookup table of the links between decision nodes in the narrative.

4. A method according to any preceding claim, further comprising
maintaining a log of a user's previous navigation choices and in response to a request to rewind the narrative;
accessing the log to identify the decision node encountered before the current decision point and
displaying the media element associated with decision node.

5. A method according to claim 4, wherein in response to a request to move forward in the narrative;
accessing the log to identify the decision point encountered after the current decision point and
displaying that decision point.

6. Apparatus for displaying a non-linear narrative media article having a plurality of media elements and decision nodes arranged in a tree data structure such that the decision nodes have at least one downstream decision node and at least one upstream node, the apparatus comprising:
a data store storing the non-linear narrative media article;
processing means for processing a current decision node to identify that node's upstream and downstream nodes;
presenting means for presenting, on a display screen, navigation options relating to downstream decision nodes and at least two upstream decision nodes leading to the current decision node; and
means for receiving a user's selection of one of the presented upstream option;
wherein the processing means is operable to process the selected upstream node associated with the selected option and the presenting means is operable to present navigation options associated with the selected upstream decision node so as to enable non-linear upstream navigation of the non-linear narrative article.

7. Apparatus according to claim 6 wherein the decision nodes contain information identifying their upstream nodes, and the processing means is operable to access the decision nodes to identify upstream nodes.

8. Apparatus according to claim 6 or claim 7, further comprising means for preprocessing the non-linear narrative article to build a lookup table of the links between decision nodes in the narrative.

9. Apparatus according to any of claims 6 to 8, further comprising
a log of a user's previous navigation choices through the non-linear narrative; and
accessing means for accessing the log, in response to a request to rewind the narrative, to identify the decision point encountered before the current decision point.

10. Apparatus according to claim 9, wherein in response to a request to move forward in the narrative;
the assessing means is operable to access the log to identify the decision point encountered after the current decision point.
